## Europäisches Patentamt
## European Patent Office
## Office européen des brevets

(19)

(11) Numéro de publication: **0 108 719**
**B1**

(12)

# FASCICULE DE BREVET EUROPEEN

(45) Date de publication du fascicule du brevet:
**16.07.86**

(51) Int. Cl.⁴: **F 23 Q 1/02,** A 47 J 36/30

(21) Numéro de dépôt: **83810490.9**

(22) Date de dépôt: **24.10.83**

(54) **Allumeur pour charge combustible.**

(30) Priorité: **28.10.82 CH 6286/82**

(43) Date de publication de la demande:
**16.05.84 Bulletin 84/20**

(45) Mention de la délivrance du brevet:
**16.07.86 Bulletin 86/29**

(84) Etats contractants désignés:
**AT BE DE FR GB IT NL SE**

(56) Documents cités:
**WO - A - 83/00425**
**FR - A - 2 366 820**
**US - A - 2 584 040**

(73) Titulaire: **POZEL S.A., Grand'Rue, 56, CH-1700 Fribourg (CH)**

(72) Inventeur: **Zellweger, Conrad, 7, chemin des Voirons, CH-1224 Chene-Bougeries (Genève) (CH)**
Inventeur: **Spreter, Victor C., 25, chemin de Ruite, CH-1252 Meinier (Genève) (CH)**

(74) Mandataire: **Ardin, Pierre et al, PIERRE ARDIN & CIE 22, rue du Mont-Blanc, CH-1211 Genève 1 (CH)**

## Description

La présente invention concerne un allumeur pour charge combustible, comprenant un support pour un élément en une composition susceptible de s'enflammer par frottement et un frottoir mobile présentant une portion de surface traitée de façon à provoquer l'inflammation de l'élément par frottement, l'élément étant logé dans un espace compris entre le support et le frottoir, ce dernier étant constitué par un organe allongé portant à proximité d'une de ses extrémités une substance pour provoquer, par frottement, l'inflammation dudit élément.

On connaît par la demande de brevet français N° 2 366 820 un allumeur de ce genre dans lequel le frottoir est sollicité par une lame ressort contre un support sur lequel on a appliqué une pellicule de substance susceptible de s'enflammer. La charge combustible est disposée des deux côtés du frottoir et l'allumage de cette dernière s'effectue latéralement en suivant la pellicule à partir de la zone occupée par le frottoir. Lorsqu'on retire le frottoir, la pellicule est inflammée, mais la lame ressort s'appuie alors directement sur la pellicule et risque d'étouffer le processus d'inflammation à ses débuts.

D'autres allumeurs, tels que celui décrit dans la demande internationale WO 83/00425 [état de la technique selon l'Article 54(3) de la CBE], comportent un élément sensible au frottement placé sur un support de façon telle que l'un de ses côtés soit disposé en regard de la masse à allumer et l'autre en regard du frottoir. Il faut donc que l'élément enflammable s'étende à travers le support ou puisse communiquer sa flamme à la charge, soit par des perforations, soit marginalement. Il s'agit là d'une fabrication difficile et compliquée. De plus, ce dispositif est susceptible d'être enflammé accidentellement par frottement contre une partie du dispositif comprenant l'allumeur ou éventuellement un objet extérieur à ce dispositif.

L'invention a pour but de remédier aux inconvénients des dispositifs connus et elle est caractérisée à cet effet en ce que l'allumeur comprend une pièce de guidage solidaire du support et formant avec ce dernier un canal entourant le dit frottoir qui est susceptible de coulisser dans ledit canal, cette pièce de guidage présentant une ouverture et l'élément étant disposé dans ce canal en regard de ladite ouverture entre le support et le frottoir de façon que l'allumage de ladite charge se propage à travers cette ouverture lorsque le frottoir est déplacé sur une course suffisante pour découvrir l'élément après son inflammation.

Le dessin annexé représente schématiquement et à titre d'exemple une forme d'exécution et deux variantes de l'allumeur objet de l'invention.

La figure 1 est une vue en perspective de cette forme d'exécution.

La figure 2 en est une coupe longitudinale.

Les figures 3 et 4 représentent des variantes d'exécution de l'allumeur.

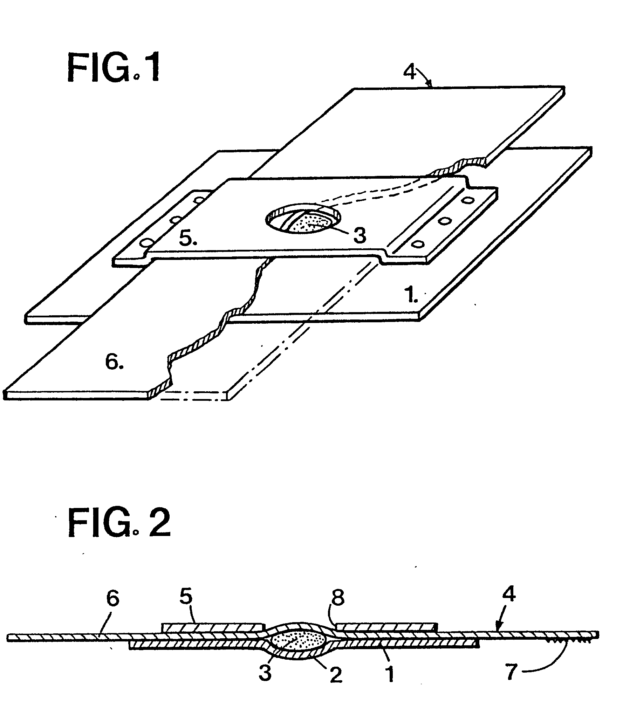

L'allumeur représenté aux figures 1 et 2 comprend un support 1 constitué par une plaque de tôle présentant une portion creuse 2 emboutie. Cette portion creuse constitue un logement dans lequel est logé un élément 3 en une composition suscptible de s'enflammer par frottement, cet élément étant réalisé sous la forme d'une pastille. A cet effet, l'allumeur comprend un frottoir 4 placé sur le support 1 et la pastille 3, ce frottoir étant retenu contre la pastille par une plaquette 5 en métal, fixée au support 1 par des points de soudure électrique.

La plaquette 5 est repliée de façon à constituer, en coopération avec le support 1, un canal pour le guidage et le maintien du frottoir 4. Ce dernier présente une portion de surface traitée de façon à provoquer l'inflammation de la pastille 3. Il est constitué à cet effet par une bande 6 portant, à l'une de ses extrémités, une couche 7 d'une substance destinée à provoquer l'inflammation de la pastille 3 par frottement. La plaquette 5 présente une ouverture ou fenêtre 8 située en regard de la pastille 3. Comme la pastille 3 fait saillie de son logement 2, la bande 6 est déformée au niveau de l'ouverture 8. Cette déformation engendre une pression d'appui du frottoir 4 contre la pastille 3.

Cette pastille 3 est en une substance similaire à celle des têtes d'allumettes, par exemple un mélange de chlorate et/ou de chromate de potassium, de peroxyde de plomb et de sulfure d'antimoine lié par de la colle forte. La surface de frottement du frottoir peut être constituée par exemple par un mélange de verre pilé, de phosphore rouge et de sulfure d'antimoine lié par de la colle forte.

Pour allumer une charge combustible, la partie de cette charge qui doit être allumée doit être située à proximité de la fenêtre 8. La pastille 3 est ensuite allumée par une traction rapide exercée sur le frottoir 4, en saisissant la bande 6 par son extrémité opposée à celle portant la couche 7. Cette traction fait glisser la bande 6 entre le support 1 et la plaquette 5 et la couche 7 passe en frottant sur la pastille 3. La fin du déplacement de la bande 6 découvre la fenêtre 8, de sorte que la pastille 3 enflammée peut transmettre sa flamme à la charge combustible.

Par la présente disposition, la pastille d'allumage 3 est enfermée entre le support 1 et la bande 6, de façon à être protégée d'une destruction par choc mécanique ou par l'humidité. En outre, l'allumeur garantit une sécurité d'emploi accrue du fait que la pastille ne peut être enflammée par frottement accidentel contre un autre objet.

L'allumeur selon l'invention peut par exemple être utilisé pour amorcer la combustion d'une cartouche chauffante d'un récipient autochauffant, du genre décrit dans la demande internationale WO 83/00425.

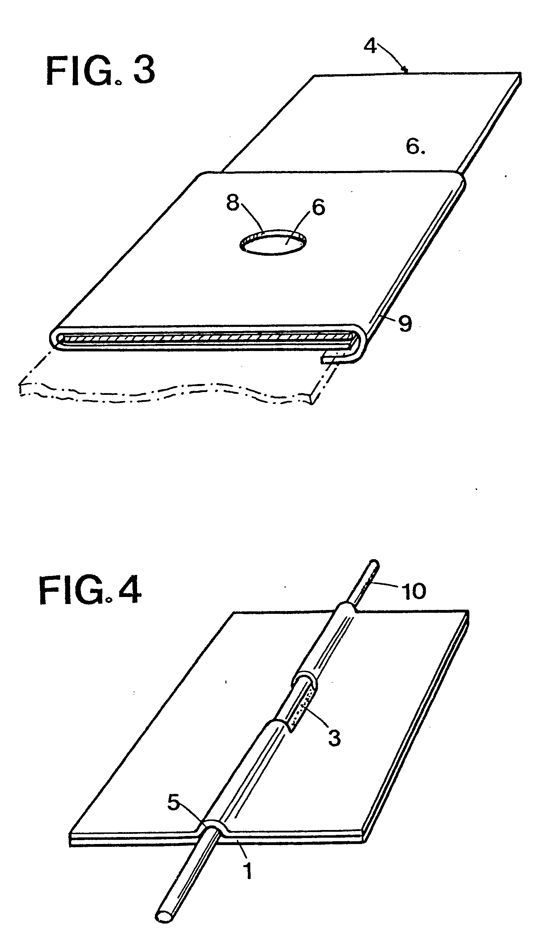

Dans la forme d'exécution selon la figure 3, le support et les moyens de maintien et de guidage sont constitués par une seule lame 9 qui est repliée pour former un canal. Cette lame est suffisamment repliée pour laisser entre ses deux faces principales une distance inférieure à l'épaisseur de la bande 6, de sorte que la lame 9 doit être légèrement déformée pour laisser un passage à cette bande qui est alors enserrée élastiquement entre ces deux faces. On obtient ainsi la pression élastique nécessaire pour donner un contact frottant entre la pastille 3 et le frottoir de la bande 6.

Dans la forme d'exécution selon la figure 4, le frottoir est constitué par un organe allongé, telle qu'une ficelle, dont une extrémité est traitée en 10 pour constituer un frottoir. Le canal formé entre le support 1 et la plaquette 5 est de section libre correspondant sensiblement à la section de la ficelle.

On peut bien entendu prévoir de nombreuses variantes d'exécution et, en particulier, le frottoir et les moyens de maintien et de guidage peuvent être de forme très différents. Le frottoir peut par exemple être constitué par un disque comportant une portion ouverte. Le support portant l'élément à enflammer est alors déplacé par rotation par rapport au frottoir et l'élément, une fois enflammé, est amené en regard de la portion ouverte du frottoir.

Dans le cas de la figure 4, le frottoir pourrait être constitué non pas par une ficelle, mais par une tige rigide, par exemple en métal, qui pourrait être traitée pour être rendue rugueuse, afin de provoquer l'inflammation de l'élément 3 sans qu'il soit nécessaire d'enduire l'extrémité de cette tige d'une substance particuliere.

En principe, il est préférable que le support et la plaquette de maintien soient réalisés en matière incombustible, bien que dans certains applications cela ne soit pas une condition essentielle. Le frottoir est normalement complètement séparé du support après l'allumage, de sorte qu'il peut fort bien être en matière combustible, par exemple un carton, dans le cas de la bande 6 de la figure 1. De toute façon, la sécurité est augmentée si le frottoir est en matière incombustible.

## Revendications

1. Allumeur pour charge combustible comprenant un support (1) pour un élément (3) en une composition susceptible de s'enflammer par frottement et un frottoir (4) mobile présentant une portion de surface traitée de façon à provoquer l'inflammation de l'élément par frottement, l'élément étant logé dans un espace compris entre le support et le frottoir, ce dernier étant constitué par un organe allongé portant à proximité d'une de ses extrémités une substance pour provoquer, par frottement, l'inflammation dudit élément, caractérisé en ce qu'il comprend une pièce de guidage (5) solidaire du support et formant avec ce dernier un canal entourant le dit frottoir qui est susceptible de coulisser dans ledit canal, cette pièce de guidage présentant une ouverture (8) de l'élément étant disposé dans ce canal en regard de ladite ouverture entre le support et le frottoir de façon que l'allumage de ladite charge se propage à travers cette ouverture lorsque le frottoir est déplacé sur une course suffisante pour découvrier l'élément après son inflammation.

2. Allumeur selon la revendication 1, caractérisé en ce que la portion traitée du frottoir est décalée par rapport à l'élément à enflammer dans un sens tel qu'un déplacement du frottoir soit nécessaire pour amener cette portion en contact frottant avec l'élément.

3. Allumeur selon la revendication 2, caractérisé en ce que la pièce de guidage est constituée par une plaquette fixée au support.

4. Allumeur selon la revendication 3, caractérisé en ce que le support comprend une portion creuse dans laquelle l'élément est retenu.

5. Allumeur selon l'une des revendications 1 à 4, caractérisé en ce que l'élément est constitué sous forme de pastille.

6. Allumeur selon la revendication 3, caractérisé en ce que la plaquette et le support sont constitués par deux portions d'une même lame repliée.

7. Allumeur selon la revendication 3 ou 6, caractérisé en ce que la distance comprise entre le support et la plaquette de guidage est inférieure à l'épaisseur du frottoir de façon à presser ce dernier élastiquement contre l'élément à enflammer.

## Patentansprüche

1. Zünder für brennbares Material, umfassend einen Träger (1) für ein Element (3), das eine solche Zusammensetzung aufweist, dass es durch Reibung entzündbar ist, und ein bewegliches Reibstück (4), das einen Oberflächenabschnitt aufweist, welcher derart behandelt ist, dass er die Entzündung des Elementes durch Reibung bewirkt, wobei das Element in einem Bereich zwischen dem Träger und dem Reibstück gelagert ist und letzteres durch ein langgestrecktes Organ gebildet ist, welches in der Nähe eines seiner Enden eine Substanz trägt, um die Entzündung des Elementes durch Reibung zu bewirken, dadurch gekennzeichnet, dass er ein fest mit dem Träger verbundenes Führungsstück (5) umfasst, welches mit letzterem einen Kanal bildet, wobei das Reibstück in dem Kanal schiebbar angeordnet ist, wobei das Führungsstück eine Öffnung (8) aufweist und das Element in diesem Kanal gegenüber der Öffnung zwischen dem Träger und dem Reibstück derart angeordnet ist, dass sich die Entzündung des Materials durch diese Öffnung fortsetzt, wenn das Reibstück auf eine Strecke versetzt wird, die dazu ausreicht, um das Element nach dessen Entzündung freizugeben.

2. Zünder nach Anspruch 1, dadurch gekennzeichnet, dass der behandelte Abschnitt des Reibstückes im Verhältnis zu dem zu entzündenden Element in eine Richtung derart versetzt ist, dass eine Versetzung des Reibstückes notwendig ist, um diesen Abschnitt in reibenden Eingriff mit dem Element zu bringen.

3. Zünder nach Anspruch 2, dadurch gekennzeichnet, dass der Führungsteil durch ein auf den Träger befestigtes Plättchen gebildet wird.

4. Zünder nach Anspruch 3, dadurch gekennzeichnet, dass der Träger einen hohlen Abschnitt umfasst, in dem das Element gehalten wird.

5. Zünder nach einem der Ansprüche 1 bis 4, dadurch gekennzeichnet, dass das Element Pillenform aufweist.

6. Zünder nach Anspruch 3, dadurch gekennzeichnet, dass das Plättchen und der Träger durch zwei Abschnitte ein und desselben gebogenen Blattes gebildet werden.

7. Zünder nach Anspruch 3 oder 6, dadurch gekennzeichnet, dass der Abstand zwischen dem Träger und dem Führungsplättchen geringer ist als die Dicke des Reibstückes, so dass letzteres elastisch gegen das zu entzündende Element gedrückt wird.

## Claims

1. Igniter for combustible material comprising a support (1) for an element (3) made of a composition capable of being ignited by friction and a movable friction-strip (4) having a surface portion treated in order to produce the ignition of the element by friction, the element being located in a space comprised between the support and the friction-strip, the latter being constituted by an elongated member carrying close to one of its ends a substance for producing, by friction, the ignition of said element, characterized in that it comprises a guiding piece (5) solid with the support and forming with the latter a channel in which said friction-strip is slidingly engaged said guiding piece having an opening (8) and said element being located in said channel in front of said opening between the support and the friction-strip such that the firing of said combustible material passes through said opening when the friction-strip is moved over a sufficient length to uncover the element after its ignition.

2. Igniter according to claim 1, characterized in that the treated portion of the friction-strip is set off with respect to the element to be ignited in such a direction that a displacement of the friction-strip is necessary to bring said portion in frictional contact with the element.

3. Igniter according to claim 2, characterized in that the guiding piece is comprised of a plate affixed to the support.

4. Igniter according to claim 3, characterized in that the support comprises a hollow portion in which the element is retained.

5. Igniter according to one of the claims 1 to 4, characterized in that the element is constituted in the form of a capsule.

6. Igniter according to claim 3, characterized in that the plate and the support are constituted by two portions of a single folded plate.

7. Igniter according to claim 3 or 6, characterized in that the distance comprised between the support and the guiding plate is less than the thickness of the friction-strip, in order to press the latter elastically against the element to be ignited.

# FIG.1

4

5.

3

1.

6.

# FIG. 2

6   5        8        4

3   2   1   7

# FIG. 3

# FIG. 4